(19) Europäisches Patentamt / European Patent Office / Office européen des brevets

(11) **EP 4 287 494 A1**

(12) **EUROPÄISCHE PATENTANMELDUNG**

(43) Veröffentlichungstag:
**06.12.2023 Patentblatt 2023/49**

(21) Anmeldenummer: **22177029.0**

(22) Anmeldetag: **02.06.2022**

(51) Internationale Patentklassifikation (IPC):
**H02P 6/17** (2016.01)       **H02P 21/00** (2016.01)

(52) Gemeinsame Patentklassifikation (CPC):
**H02P 6/17; H02P 21/00;** H02P 2209/11

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft**
**80333 München (DE)**

(72) Erfinder: **Hoffmann, Andreas**
**91077 Neunkirchen am Brand (DE)**

(74) Vertreter: **Siemens Patent Attorneys**
**Postfach 22 16 34**
**80506 München (DE)**

(54) **BÜRSTENLOSE GLEICHSTROMMASCHINE MIT EINER HALL-SENSOREN UMFASSENDEN SENSOREINRICHTUNG**

(57)    Die Erfindung betrifft ein Verfahren zum Ansteuern einer Erregerwicklung (U, V, W) einer bürstenlosen Gleichstrommaschine (1) sowie eine bürstenlose Gleichstrommaschine (1), umfassend:

einen Stator (3) mit wenigstens einer Erregerwicklung (U, V, W), einen Rotor (2) mit wenigstens einem Permanentmagnet (N, S), eine Sensoreinrichtung mit wenigstens einem Hall-Sensor (H1, H2, H3) zum Detektieren einer Winkellage ($\phi$) des Rotors (2) relativ zu dem Stator (3), wobei die Erregerwicklung (U, V, W) mittels einer Stromrichtereinrichtung (7) angesteuert wird, die einen Stromfluss durch die Erregerwicklung (U, V, W) in Abhängigkeit der von der Sensoreinrichtung detektierten Winkellage ($\phi$) bestimmt, wobei mittels der Sensoreinrichtung eine Winkelgeschwindigkeit ($\omega$) ermittelbar ist, mit der der Rotor (2) relativ zu dem Stator (3) rotiert.

Bei einer derartigen bürstenlosen Gleichstrommaschine (1) sollen ein besserer Motorrundlauf und eine gleichmäßigere Drehmomentabgabe erreicht werden.

Die Erfindung sieht hierzu vor, dass anhand der detektierten Winkellage ($\phi$) und der ermittelten Winkelgeschwindigkeit ($\omega$) eine korrigierte Winkellage bestimmbar ist und der Stromfluss durch die Erregerwicklung in Abhängigkeit der korrigierten Winkellage ($\phi$) bestimmbar ist.

FIG 3

EP 4 287 494 A1

**Beschreibung**

Die Erfindung betrifft eine bürstenlose Gleichstrommaschine, umfassend: einen Stator mit wenigstens einer Erregerwicklung, einen Rotor mit wenigstens einem Permanentmagnet, eine Sensoreinrichtung mit wenigstens einem Hall-Sensor zum Detektieren einer Winkellage des Rotors relativ zu dem Stator, wobei die Erregerwicklung mittels einer Stromrichtereinrichtung angesteuert wird, die einen Stromfluss durch die Erregerwicklung in Abhängigkeit der von der Sensoreinrichtung detektierten Winkellage bestimmt, und wobei mittels der Sensoreinrichtung eine Winkelgeschwindigkeit detektierbar ist, mit der der Rotor relativ zu dem Stator rotiert.

Bürstenlosen Gleichstrommaschinen, insbesondere bürstenlose Gleichstrommotoren, englischsprachig häufig als "BLDC" - Brushless DC Motor bezeichnet, werden aufgrund der Einfachheit des Gebersystem und des Controllers oft mittels einer Stromrichtereinrichtung in Form eines Blockkommutators angesteuert, welche diverse Nachteile (Drehmomentrippel, erhöhte Verluste usw.) mit sich bringt.

Zur Kommutierung des Stromflusses bei einer bürstenlosen Gleichstrommaschine ist es erforderlich, die Winkellage (Winkelstellung) des Rotors gegenüber dem Stator zu kennen. Dabei ist es in der Regel - insbesondere im Fall der genannten Blockkommutierung - nicht erforderlich, die Winkellage exakt zu bestimmen, sondern die Detektion erfolgt bei vielen Anwendungen mittels einer Sensoreinrichtung, die wenigstens einen, in der Regel jedoch 3 jeweils bezüglich einer Achse der Maschine um einen Winkel versetzt zueinander an der Maschine angeordnete Hall-Sensoren (Hall-Geber) umfasst, die kostengünstig verfügbar sind und zum Detektieren einer Winkellage des Rotors relativ zu dem Stator dienen.

Bei der genannten Anwendung ist es nicht erforderlich, die Stärke des von dem bzw. den Permanentmagneten erzeugten Magnetfeldes zu bestimmen, sondern die Kenntnis der Magnetfeldrichtung (Polarisierungsrichtung) genügt. Die Hall-Sensoren liefern daher jeweils nur ein binäres Signal, welches die Polarisierung des Magnetfeldes (in radialer Richtung bezüglich der Maschinen-Achse) liefert. Aus diesen Signalen lässt sich daher die Winkellage des Rotors nur relativ ungenau direkt ableiten.

Für eine feldorientierte Regelung (FOC) des Stromes in den Erregerwicklungen muss der Rotorwinkel hingegen möglichst exakt bekannt sein. Daher wird für eine derartige Anwendung bislang auf eine weniger kostengünstige Sensoreinrichtung zurückgegriffen, welche eine höhere Auflösung bietet.

Aufbau und Funktionsweise eines bürstenlosen Gleichstrommotors gehen beispielsweise aus https://de.wikipedia.org/wiki/B%C3%BCrstenloser_Gleichstrommo tor bzw. https://en.wikipedia.org/wiki/Brushless_DC_electric_motor hervor.

Aufgabe der vorliegenden Erfindung ist es, bei einer bürstenlosen Gleichstrommaschine mit einer kostengünstigen Sensoreinrichtung einen besserer Motorrundlauf und eine gleichmäßigere Drehmomentabgabe zu erreichen.

Diese Aufgabe wird bei einer bürstenlosen Gleichstrommaschine gemäß dem Oberbegriff dadurch gelöst, dass - mittels der Sensoreinrichtung - anhand der detektierten Winkellage und der detektierten Winkelgeschwindigkeit eine korrigierte Winkellage bestimmbar ist und der Stromfluss durch die Erregerwicklung in Abhängigkeit der korrigierten Winkellage bestimmbar ist.

Die Erfindung bietet den Vorteil, dass trotz der Verwendung einer kostengünstigen Sensoreinrichtung auf Basis von Hall-Sensoren, die jeweils lediglich ein binäres Signal liefern, welches jeweils die Polarisierung des Magnetfeldes am Ort des Hall-Sensors in radialer Richtung bezüglich der Maschinen-Achse anzeigt, dennoch die Position (Winkellage) des Rotors gegenüber dem Stator über den kompletten Winkelbereich von 360° verhältnismäßig genau bestimmbar ist. Insbesondere ist die so ermittelte Winkellage hinsichtlich ihrer Genauigkeit für eine feldorientierte Regelung (FOC) des Erregerstromes, insbesondere in Kombination mit einer Raumzeiger- / Sinusmodulation anstatt einer Blockkommutierung, geeignet.

Eine bevorzugte Ausführungsform der Erfindung sieht vor, dass genau drei Erregerwicklungen gleichmäßig (jeweils um 120° zueinander versetzt) um eine Rotationsachse der bürstenlosen Gleichstrommaschine (nachfolgend auch kurz "Maschine" genannt) verteilt am Stator angeordnet sind. Diese Ausführungsform ist weit verbreitet und besonders kostengünstig. Es sind jedoch auch mehr als drei, insbesondere Vielfache von drei Erregerwicklungen möglich. Auch eine ungleichmäßige Verteilung der Erregerwicklungen ist denkbar, aber unüblich. Ferner sind auch Ausführungsformen mit lediglich einer oder zwei Erregerwicklungen denkbar, aber ebenfalls unüblich.

Mittels der drei Erregerwicklungen kann ein magnetisches Drehfeld erzeugt werden, welches während einer elektrischen Periode des Motorstromes um 360° umläuft. Das magnetische Drehfeld hat einen Nord- und einen Südpol und damit die Polpaarzahl 1.

Durch die Anordnung von Vielfachen von drei Erregerwicklungen können eine entsprechende Anzahl an Polpaaren und damit Motoren mit entsprechend höherer Polpaarzahl erzeugt werden.

Eine besonders einfache und kostengünstige Ausführungsform der Erfindung sieht lediglich einen Permanentmagnet und damit ein Polpaar am Rotor vor. Eine andere Ausführungsform der Erfindung sieht jedoch eine Vielzahl an Permanentmagneten und damit einhergehend eine Vielzahl an Polpaaren vor, die, insbesondere gleichmäßig, um eine bzw. die Rotationsachse der Maschine verteilt am Rotor angeordnet sind. Dadurch entstehen eine höheres Drehmoment sowie ein gleichmäßigerer Drehmomentverlauf der Maschine.

Üblicherweise stimmt die Anzahl der Polpaare des Stators mit der Anzahl der Polpaare des Rotors überein und bestimmt die Polpaarzahl des Motors.

Eine Ausführungsform der Erfindung sieht vor, dass die Sensoreinrichtung der bürstenlosen Gleichstrommaschine mehrere, insbesondere genau drei Hall-Sensoren umfasst. Diese Ausführungsform bietet den Vorteil, dass damit auch die Winkelstellung des Rotors bei ruhender Maschine bestimmt werden kann.

Vorteilhaft sind die Hall-Sensoren gleichmäßig, also um einen Winkel von 120° bezüglich einer Achse bzw. der Rotationsachse der Maschine versetzt am Stator angeordnet. Es sind jedoch auch andere Abstände möglich. So ist ein Abstand von jeweils 60° zwischen zwei benachbarten Hall-Sensoren ebenfalls häufig anzutreffen.

Der Rotor der Maschine ist entlang seines Außenumfangs durch die Anzahl und Anordnung der Permanentmagnete in Polabschnitte einteilbar, wobei sich benachbarte Polabschnitte hinsichtlich ihrer Polarisierung (Nordpol oder Südpol) unterscheiden. Bewegt sich durch die Drehbewegung des Rotors die Grenze zwischen zwei benachbarten Polabschnitten (ein Pol-Übergang) an einem Hall-Sensor vorbei, so wechselt dessen Ausgangssignal von High (1) nach Low (0) oder umgekehrt. So kennt man zum Zeitpunkt des Umschaltens des Hall-Sensors (ggf. in Verbindung mit den Ausgangssignalen der weiteren Hall-Sensoren) die Winkellage des Rotors bzw. die Rotorstellung der Maschine genau. Die Anzahl der Pol-Übergänge am Außenumfang des Rotors entspricht der doppelten Polpaarzahl des Rotors. Ein Rotor mit der Polpaarzahl eins hat demnach einen Nord- und einen Südpol und entlang seines Außenumfangs zwei Pol-Übergänge. Durch die genannte Anordnung der Hallsensoren lässt sich die Winkellage des Rotors in 6 Sektoren einteilen, die sich jeweils durch unterschiedliche, von den Hall-Sensoren erzeugte Ausganssignale unterscheiden. Für alle Winkellagen innerhalb eines Sektors liefern die Hall-Sensoren hingegen dieselben Ausgangssignale.

Durch die genannte Einteilung der Winkellage des Rotors in Sektoren und die Anordnung der Hall-Sensoren ist es möglich, den von den Hall-Sensoren erzeugten Ausganssignalen jeweils eindeutig einem bestimmten Sektor zuzuordnen, innerhalb dessen die aktuelle Winkellage des Rotors liegt. Dies gilt insbesondere auch bei ruhendem Motor, so dass man bereits vor dem Hochlauf die ungefähre Winkellage des Rotors kennt.

Anhand der zeitlichen Abfolge der Ausgangssignale der Hall-Sensoren lässt sich bei der Rotation des Rotors, auch anhand der Abfolge dadurch erkannter Sektoren, die Drehrichtung des Rotors und - zumindest näherungsweise - auch die Winkelgeschwindigkeit bestimmen, mit der sich der Rotor um die Maschinenachse dreht.

Kennt man die Winkelstellung des Rotors zu einem bestimmten Zeitpunkt bzw. zu bestimmten Zeitpunkten exakt (immer dann, wenn sich ein Pol-Übergang an einem der Hall-Sensoren vorbei bewegt und das Ausgangssignal des betreffenden Hall-Sensors "kippt") und kennt man ferner die Winkelgeschwindigkeit, mit der der Rotor rotiert, so lassen sich Winkelstellungen des Rotors nach einem solchen Zeitpunkt extrapolieren bzw. Winkelstellungen zwischen solchen Zeitpunkten interpolieren.

Anders als bisher bekannten Lösungen, bei denen bei einer bürstenlosen Gleichstrommaschine unter Verwendung von Hall-Sensoren lediglich die Hauptwinkel der Segmente bestimmt und zur Regelung des Kommutators verwendet wurden, können nun "korrigierte Winkelstellungen" ermittelt werden, die zu jedem Zeitpunkt nicht nur einen der Hauptwinkel, sondern wie beschrieben auch dazwischen liegende, soll heißen beliebige Winkelstellungen zwischen den jeweiligen Sektorgrenzen, angeben. Damit wird eine feldorientierte Regelung des Erregerstromes mittels einer Stromrichtereinrichtung möglich.

Bei der Winkelgeschwindigkeit handelt es sich um die erste Ableitung der Winkelstellung des Rotors nach der Zeit. Noch genauere Ergebnisse hinsichtlich der aktuellen Winkelstellung des Rotors lassen sich dadurch erzielen, dass neben der Winkelgeschwindigkeit, also der ersten Ableitung der Winkelstellung des Rotors nach der Zeit, noch höhere Ableitungen, z.B. die zweite Ableitung (Winkelbeschleunigung) ebenfalls berücksichtigt werden.

Bei einer Maschine mit Polpaarzahl 1 stimmten der elektrische Zyklus und der mechanische Zyklus überein. D.h., werden die 3 Erregerwicklungen mit einer vollständigen elektrischen Periode (entsprechend einem "elektrischen Winkel" von 360°) angesteuert, so bewegt sich auch der Rotor (die Mechanik) um 360°. Der "elektrische" und der "mechanische" Winkelbereich einer Periode stimmen demnach überein.

Anders hingegen bei Maschinen mit Polpaarzahlen > 1. Bei der Polpaarzahl 2 überstreicht das von den Erregerspulen erzeugte Magnetfeld bei einer vollständigen Periode des Erregerstroms (Motorstroms) lediglich einen Winkel von 180°. Ebenso bilden die 6 Sektoren, die mittels der von den drei Hall-Sensoren erzeugten Ausgangssignale unterscheidbar sind, lediglich einen Winkelbereich von 180° ab, im Unterschied zu einem Bereich von 360° bei Polpaarzahl 1. Der "elektrische Winkel" ist daher ggf. durch die Polpaarzahl zu dividieren, um den "mechanischen Winkel" (den von dem Rotor überstrichenen Winkelbereich bei einer Periode des Erregerstromes) zu erhalten.

Die Erfindung betrifft ferner ein Verfahren zum Ansteuern einer Erregerwicklung einer bürstenlosen Gleichstrommaschine gemäß einer der oben beschriebenen Ausgestaltungen mittels einer Stromrichtereinrichtung, wobei die bürstenlose Gleichstrommaschine einen Stator mit wenigstens einer Erregerwicklung, einen Rotor mit wenigstens einem Permanentmagnet sowie eine Sensoreinrichtung mit wenigstens einem Hall-Sensor umfasst,

wobei die Stromrichtereinrichtung einen Stromfluss durch die Erregerwicklung in Abhängigkeit der von der Sensoreinrichtung detektierten Winkellage bestimmt,

wobei die Sensoreinrichtung eine Winkelgeschwindigkeit detektiert, mit der der Rotor relativ zu dem Stator rotiert,

wobei anhand der detektierten Winkellage und der detektierten Winkelgeschwindigkeit eine korrigierte Winkellage bestimmt wird und der Stromfluss durch die Erregerwicklung in Abhängigkeit der korrigierten Winkellage bestimmt wird.

Im Vergleich zu bisherigen Verfahren, die zur Ermittlung der Winkellage ebenfalls kostengünstige Hall-Sensoren verwenden, kann durch das erfindungsgemäße Verfahren - trotz Verwendung kostengünstiger Hall-Sensoren - die Winkellage des Rotors sehr viel genauer bestimmt werden, womit beispielsweise eine feldorientierte Regelung des Erregerstromes möglich wird.

Das genannte Verfahren ist insbesondere vorteilhaft geeignet für bürstenlosen Gleichstrommaschinen, umfassend wenigstens drei, insbesondere genau drei oder Vielfache von drei, Erregerwicklungen, die insbesondere gleichmäßig um eine Rotationsachse der Gleichstrommaschine verteilt am Stator angeordnet sind. Derartig Maschinen sind verhältnismäßig kostengünstig herstellbar und bieten einen verhältnismäßig gleichmäßigen Drehmomentverlauf.

Das genannte Verfahren ist weiterhin vorteilhaft geeignet für bürstenlosen Gleichstrommaschinen, umfassend eine Vielzahl an Permanentmagneten und damit einhergehend eine Vielzahl an Polpaaren, die, insbesondere gleichmäßig, um eine bzw. die Rotationsachse der Gleichstrommaschine verteilt am Rotor angeordnet sind.

Diese Maschinen erzeugen im Vergleich zu einpoligen Maschinen ein höheres Drehmoment.

Das genannte Verfahren ist darüber hinaus vorteilhaft geeignet für bürstenlosen Gleichstrommaschinen, umfassend eine Sensoreinrichtung mit mehreren, insbesondere genau drei Hall-Sensoren, die, insbesondere gleichmäßig, um eine bzw. die Rotationsachse der Gleichstrommaschine verteilt am Stator angeordnet sind, wobei die Hallsensoren insbesondere jeweils ein binäres Ausgangssignal erzeugen.

Eine derartige Sensoreinrichtung ist besonders kostengünstig und erzeugt durch das erfindungsgemäße Verfahren eine hohe Winkelauflösung.

Eine Ausführungsform des erfindungsgemäßen Verfahrens zeichnet sich dadurch aus, dass zu einem bestimmten Zeitpunkt, zu dem sich das von dem Hall-Sensor bzw. von einem der Hall-Sensoren erzeugte Ausgangssignal ändert, die Winkellage des Rotors bestimmt wird. Das binäre Ausgangssignal eines bestimmten Hall-Sensors ändert sich genau dann, wenn sich die Polarisierung des Magnetfelds im Bereich des betreffenden Hall-Sensors ändert. Damit ist die Winkellage des Rotors für diesen Zeitpunkt exakt bekannt im Vergleich zu Zeitpunkten, in denen sich keines der von den Hall-Sensoren erzeugten Ausgangssignale ändert. Insbesondere wird die Winkellage fortlaufend zu allen Zeitpunkten (exakt) bestimmt, zu denen sich eine Polarisierungs-Grenze (ein Pol-Übergang) an einem der Hall-Sensoren vorbei bewegt und somit dessen Ausgangssignal in diesem Zeitpunkt kippt. Während der Rotation des Rotors gibt es somit fortlaufend neue Zeitpunkte, in denen die Winkellage des Rotors exakt bekannt ist. Eine "exakte" Winkellage bezeichnet somit im Rahmen dieser Anmeldung eine Winkellage zu einem Zeitpunkt, zu dem eines der Hall-Signale sich ändert. Selbstverständlich bezeichnet "exakt" nicht eine absolut hochgenaue Winkellage, wie man sie beispielsweise mit einem externen Messsystem aufwändig ermitteln könnte, sondern "exakt" im Rahmen der mit der Sensoreinrichtung möglichen Genauigkeit und insbesondere "exakt" in Relation zu Winkelbereichen, in denen sich keines der Hall-Signale ändert und die man daher nur abschätzen kann.

Bei einer bevorzugten Ausführungsform des erfindungsgemäßen Verfahrens wird die Winkellage des Rotors in Sektoren (üblicherweise 6 an der Zahl) eingeteilt, derart, dass unterschiedlichen von den Hall-Sensoren erzeugten Ausgangssignalen jeweils ein bestimmter Sektor zugeordnet wird. Die Polarisierung des Magnetfelds im Bereich des betreffenden Hall-Sensors ändert sich genau dann, wenn ein Pol-Übergang des Rotors eine Sektor-Grenze zwischen zwei benachbarten Sektoren überschreitet. Zu diesem Zeitpunkt ist somit die Winkellage des Rotors als Grenzwinkel zwischen zwei benachbarten Sektoren exakt (im Rahmen der mit der Sensoreinrichtung möglichen Auflösung) bekannt, insbesondere in Verbindung mit den Ausgangssignalen der übrigen Hall-Sensoren.

Es wird an dieser Stelle angemerkt, dass die Einteilung in Sektoren eine Vereinfachung mit sich bringt und bei der Blockkommutierung bekannt und üblich ist, aber nicht zwingend erforderlich ist zur Ausführung des erfindungsgemäßen Verfahrens.

Einer bevorzugten Ausführungsform des erfindungsgemäßen Verfahrens sieht weiterhin vor, dass mittels der zeitlichen Abfolge der von dem Hall-Sensor bzw. den Hall-Sensoren erzeugten binären Ausgangssignale die Winkelgeschwindigkeit des Rotors bestimmt wird.

Die Winkelgeschwindigkeit ergibt sich insbesondere als Ableitung des Winkels nach der Zeit. Bereits aus zwei wie oben beschriebenen "exakten" Winkellagen kann somit eine Winkelgeschwindigkeit ermittelt werden. In der Regel werden jedoch mehr als zwei "exakte" Winkellagen zur Bestimmung der Winkelgeschwindigkeit herangezogen.

Sind nun die Winkellage zu einem bestimmten Zeitpunkt und die Winkelgeschwindigkeit bekannt, so können für nachfolgende Zeitpunkte, insbesondere für den Zeitraum, bis sich erneut ein Ausgangssignal eines Hall-Sensors ändert und damit die Winkellage erneut exakt bekannt ist, die Winkellagen extrapoliert bzw. die Winkellagen für Zeitpunkte zwischen zwei solchen Zeitpunkten, in denen die exakte Winkellage bekannt ist, interpoliert werden.

Die Erfindung kann vorteilhaft insbesondere zur feldorientierten Regelung des Stromflusses in den Erregerwicklungen verwendet werden, die nun auch unter Verwendung kostengünstiger Hall-Sensoren erfolgen kann.

Die Erfindung wird nachfolgend anhand von Ausführungsbespielen exemplarisch näher beschrieben und erläutert. Dabei zeigen:

FIG 1     eine bürstenlose Gleichstrommaschine mit einem Blocckommutator,

FIG 2     Ausganssignale von Hall-Sensoren,

FIG 3     Sektoren und Winkel bei einer Blockkommutierung,

FIG 4     eine bürstenlose Gleichstrommaschine mit einer Stromrichtereinrichtung,

FIG 5     eine erfindungsgemäße Bestimmung der Winkellagen,

FIG 6     ein Blockschaltbild einer Winkelbestimmungseinrichtung,

FIG 7     Verfahrensschritte bei der Durchführung eines erfindungsgemäßen Verfahrens.

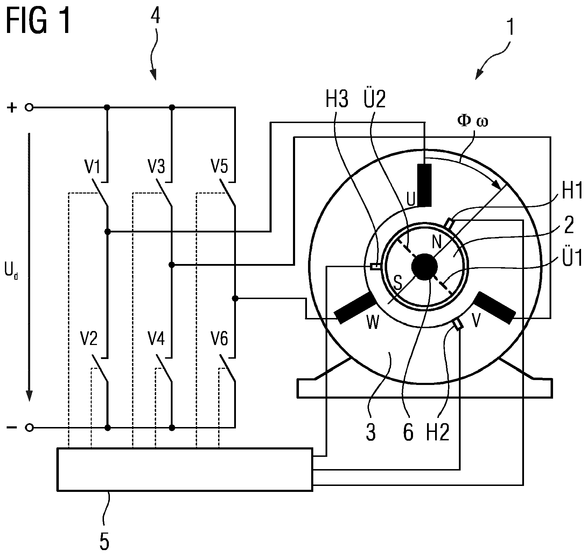

FIG 1 zeigt eine bürstenlose Gleichstrommaschine in Form eines bürstenlosen Gleichstrommotors 1, umfassend einen Rotor 2 und einen Stator 3. Der Rotor 2 umfasst im Ausführungsbeispiel einen einzigen Permanentmagnet mit dem ersichtlichen Nordpol N und Südpol S. Die Polpaarzahl des Rotors beträgt somit 1. Selbstverständlich sind auch Rotoren mit einer höheren Polpaarzahl möglich.

Der Rotor umfasst im Ausführungsbeispiel an seinem Außenumfang somit zwei Magnetpole (N und S) und damit - über den Umfang betrachtet - zwei Pol-Übergänge Ü1 und Ü2 zwischen unterschiedlichen Polen (Bereichen unterschiedlicher Polarisierung).

Im Ausführungsbeispiel gemäß FIG 1 sind die drei Hall-Sensoren H1 bis H3 jeweils um einen Winkel von 120° gegeneinander versetzt am Stator 3 angeordnet, wobei der Hall-Sensor H1 um 30° gegenüber der der Nullstellung des Rotors 2 (bei 12 Uhr) im Uhrzeigersinn versetzt am Stator 3 angeordnet ist. Ebenso wäre es möglich, dass die beiden benachbarten Hall-Sensoren H1 und H2 sowie die beiden benachbarten Hall-Sensoren H2 und H3 jeweils einen Winkel von 60° einschließen. Beide SensorAnordnungen haben die Eigenschaft, dass sich bei der Rotation des Rotors 2 in einer bestimmten Richtung stets nach einem Drehwinkel von 60° einer der beiden Pol-Übergänge Ü1 oder Ü2 an einem der drei Hall-Sensoren H1, H2 oder H3 vorbei bewegt.

Immer dann, wenn sich ein Pol-Übergang Ü1 oder Ü2 an einem der Hall-Sensoren H1 bis H3 vorbei bewegt, wechselt dessen Ausgangssignal von High (1) nach Low (0) oder umgekehrt, es "kippt".

Die High- und Low-Signale eines jeden Hall-Sensors H1 bis H3 sind somit bei der Rotation des Rotors 2 um 180° versetzt und die drei Ausgangssignale der Hall-Sensoren H1 bis H3 (Hall-Signale) sind untereinander bei der gezeigten Anordnung wiederum um 120° zueinander versetzt.

Weiterhin umfasst der bürstenlose Gleichstrommotor 1 im Stator 3 die drei Erregerwicklungen U, V und W, die ein Stator-Magnetfeld erzeugen.

FIG 1 zeigt ferner einen als Blockkommutator ausgebildeten Kommutator 4, der mittels Schalttransistoren V1 bis V6 den Erregerwicklungen U, V und W des Motors 1 einen Erregerstrom aus der Gleichspannungsquelle $U_d$ zuführt. Die Ansteuerung der Schalttransistoren V1 bis V6 erfolgt mittels einer Steuerung 5, der die Ausgangssignale der Hall-Sensoren H1, H2 und H3 zugeführt sind. Dabei werden die Schalttransistoren V1 bis V6 derart angesteuert, dass die Erregerwicklungen U, V und W ein Drehfeld erzeugen, welches die Rotation des Rotors 2 bewirkt. Die Ansteuerung der Schalttransistoren V1 bis V6 und damit die Stromzufuhr zu den Erregerwicklungen U, V und W erfolgen dabei in Abhängigkeit der Winkelstellung φ des Rotors 2.

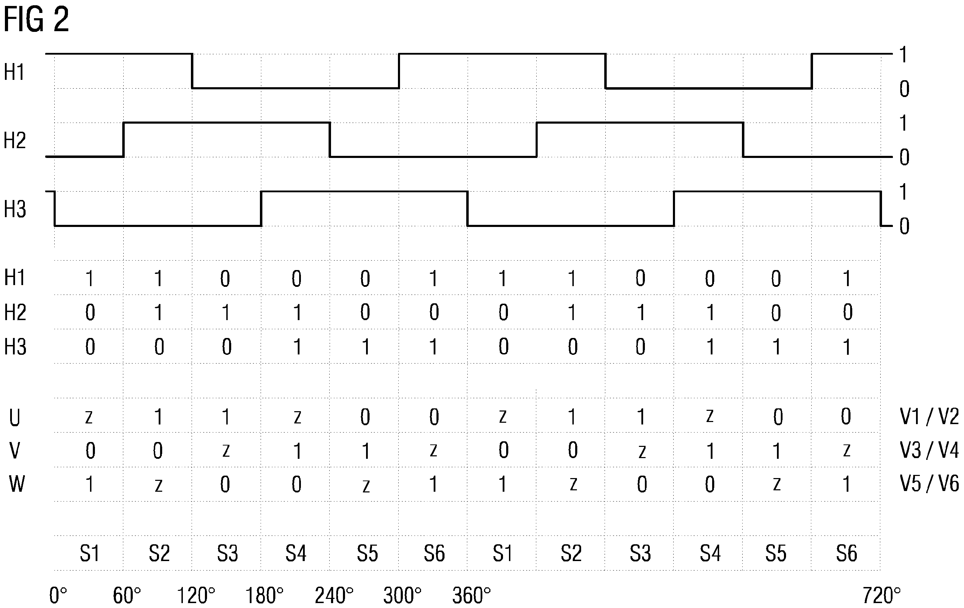

FIG 2 zeigt im oberen Teil den Signalverlauf der binären Ausgangssignale der drei Hall-Sensoren H1, H2 und H3 über zwei vollständige Umdrehungen (720°) des Rotors 2 aus FIG 1. Darunter sind die Ausgangssignale jeweils in Form von Binärzahlen (1 entspricht High, 0 entspricht Low) angegeben.

Wie aus der Figur ferner ersichtlich ist, schaltet immer im Abstand von 60° genau eines der Ausgangssignale, d.h. es ändert seinen Zustand von High (1) nach Low (0) oder umgekehrt. Die Winkellage des Rotors 2 kann somit in 6 Sektoren S1 bis S6 von jeweils 60° unterteilt werden, innerhalb derer die Ausgangssignale der Hall-Sensoren H1 bis H3 jeweils ihren Zustand (ihr Ausgangssignal) nicht ändern. Die 6 unterschiedlichen Sektoren S1 bis S6 und die jeweils zugeordneten Grenzwinkel (0°, 60°, 120°, ...) sind dem unteren Teil von FIG 2 zu entnehmen.

Aus den drei Ausgangssignalen der Hall-Sensoren H1 bis H3 ergeben sich 6 unterschiedliche Zustände. Weißt man dem Sensor H1 das LSB (least significant bit) und dem Sensor H3 das HSB (highest significant bit) zu, lassen sich aus den binären Werten theoretisch Zahlen zwischen 0 und 7 ($H1*2^0 + H2*2^1 + H3*2^2$) ermitteln, wobei hier zwei Zustände nicht vorkommen und somit unzulässige Ausgangssignale sind.

Aus der Hallsignal-Codierung für das Ausführungsbeispiel ergibt sich damit für die Sektoren:

    S1 (0° - 60°): 001 (BIN) = 1
    S2 (60° - 120°): 011 (BIN) = 3
    S3 (120° - 180°): 010 (BIN) = 2

S4 (180° - 240°): 110 (BIN) = 6
S5 (240° - 300°): 100 (BIN) = 4
S6 (300° - 360°): 101 (BIN) = 5

Anhand dieser Codierung und der daraus ersichtlichen Zuordnung der Winkelstellung des Rotors 2 zu einem der Sektoren S1 bis S6 erfolgt die passende Ansteuerung der Erregerwicklungen U, V und W bzw. der Schaltzustand der Schalttransistoren V1 bis V6. Diese sind beispielhaft ebenfalls aus FIG 2 ersichtlich. Beispielsweise bedeutet für die Erregerwicklung U der Wert 0, dass der Transistor V1 (siehe FIG 1) offen und der Transistor V2 durchgeschaltet ist und somit der Minuspol (Masse) der Spannungsquelle $U_d$ an dem ersichtlichen Wicklungsende der Erregerwicklung U anliegt. Der Wert 1 bedeutet hingegen, dass der Transistor V1 (siehe FIG 1) durchgeschaltet und V2 offen ist und somit der Pluspol der Spannungsquelle $U_d$ an dem ersichtlichen Wicklungsende der Erregerwicklung U anliegt. Der Wert z bedeutet, beide Transistoren V1 und V2 sind geöffnet und der Spannungspunkt "floatet".

Analog verhält es sich mit den beiden anderen Erregerwicklungen V und W und den jeweils zugeordneten Schalttransistoren V3 und V4 bzw. V5 und V6.

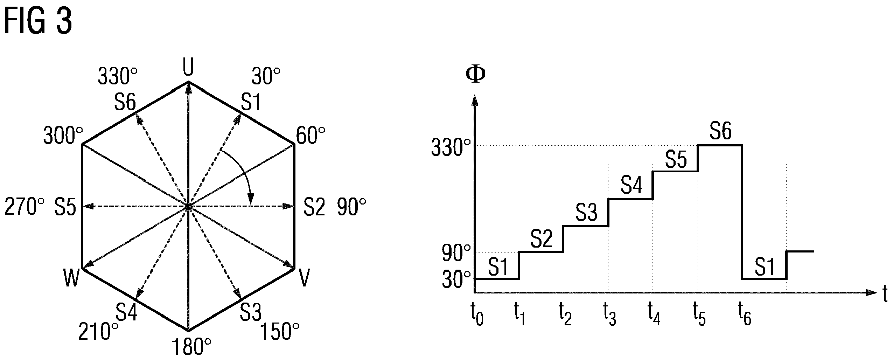

In FIG 3 sind die Sektoren S1 bis S6 mit ihren Sektorgrenzen veranschaulicht. Für jeden Sektor S1 bis S6 wird ein "Hauptwinkel" bestimmt, der jeweils dem mittleren Winkel zwischen den beiden Sektorgrenzen des jeweiligen Sektors entspricht. Schließt Sektor S1 den Rotorwinkel zwischen 0° und 60° ein, so beträgt der Hauptwinkel für diesen Sektor demnach 30°. Die tatsächliche Winkelstellung des Rotors 2 (siehe FIG 1) ist durch diese Einteilung für diesen Sektor somit auf ± 30° genau bestimmbar. Ebenso verhält es sich mit den übrigen Sektoren S2 bis S6 und deren Hauptwinkeln 90°, 150°, 210°, 270° und 330°.

Ebenso ersichtlich ist für das Ausführungsbeispiel gemäß FIG 3 die Lage der Erregerwicklungen U, V und W, wobei die Erregerwicklung U bezüglich der Rotor-Null-Lage bei 0°, die Erregerwicklung V bei 120° und die Erregerwicklung W bei 240° angeordnet sind.

Weiterhin angedeutet sind durch den ersichtlichen Winkelpfeil (ohne Bezugszeichen) die Drehrichtung des Rotors (in positiver Uhrzeigersinn-Richtung) und dass die von der Sensoreinrichtung ermittelte Winkellage des Rotors beim Überschreiten der Sektorgrenze bei 60° zwischen dem ersten Sektor S1 und dem zweiten Sektor S2 von 30° auf 90° und damit von dem Hauptwinkel des ersten Segments S1 auf den Hauptwinkel des zweiten Segments S2 springt.

Allgemein kann mittels der Codierung und durch die Verwendung von Hall-Sensoren die Winkelstellung des Rotors auch im Stillstand des Motors erkannt werden. Auch die Drehrichtung des Motors ergibt sich bei einer Rotation des Rotors aus der Reihenfolge erkannter Sektoren. Der Motor kann somit relativ gut "aus dem Stand" angefahren werden.

Im rechten Teil von FIG 3 sind die Sektoren und Hauptwinkel für eine Rotation des Rotors 2 mit konstanter Winkelgeschwindigkeit nochmals veranschaulicht. Durch die konstante Winkelgeschwindigkeit erfolgen die Umschaltzeitpunkte in äquidistanten zeitlichen Abständen.

Bei einer Blockkommutierung wird immer auf die Hauptwinkel der Sektoren S1 bis S6 geregelt und es werden immer nur zwei Erregerwicklungen (Phasen) bestromt, wie beispielhaft in FIG 2 veranschaulicht wurde. Dies hat jedoch mehrere Nachteile wie Drehmomentrippel oder erhöhte Verluste im Motor 1 zur Folge.

Um diese Nachteile zu umgehen, werden gemäß der Erfindung nicht nur die Hauptwinkel, sondern weitere Winkel, insbesondere die Winkelinformationen der Sektor-Übergänge, zur Regelung der Stromrichtereinrichtung verwendet.

Steht der Rotor 2 still bzw. kommt zum Stillstand, wird zur Regelung der Hauptwinkel als Rotorwinkel angenommen, der wie oben beschrieben anhand der Codierung der Ausgangssignale der Hall-Sensoren H1 bis H3 bestimmbar ist.

Bewegt sich der Rotor 2, hat dies - zumindest bei einer Drehung des Rotors 2 um mehr als 60° - zur Folge, dass die Winkellage des Rotors 2 während der Drehbewegung in unterschiedlichen Sektoren liegt. Dabei lässt sich der Rotorwinkel an den Sektor-Übergängen, also im Ausführungsbeispiel gemäß FIG 1 die Winkelstellungen des Rotors 2 bei 0°, 60°, 120° usw., sehr genau ("exakt") bestimmen.

Mittels der gemessenen Zeit zwischen den Sektor-Übergängen kann die momentane Winkelgeschwindigkeit bzw. Drehzahl des Rotors 2 bestimmt werden. Nimmt man beide Informationen zusammen, also die genaue Winkelinformation an den Sektor-Übergängen und die Winkelgeschwindigkeit, so können die Winkelstellungen des Rotors 2 zwischen den Sektor-Übergängen interpoliert bzw. ausgehend von einem bestimmten Sektor-Übergang extrapoliert werden. Dieser Vorgang wird auch als "Winkelkorrektur" bezeichnet. Damit liegt die tatsächliche Winkelstellung $\phi$ des Rotors 2 für alle Winkel sehr viel genauer vor im Vergleich zu der bisherigen Methode mit einer Genauigkeit von ± 30°. Die Abweichung zwischen der gemessenen bzw. messtechnisch bestimmten Winkelstellung des Rotors 2 und der tatsächlichen Winkelstellung des Rotors 2 wird dadurch sehr viel geringer.

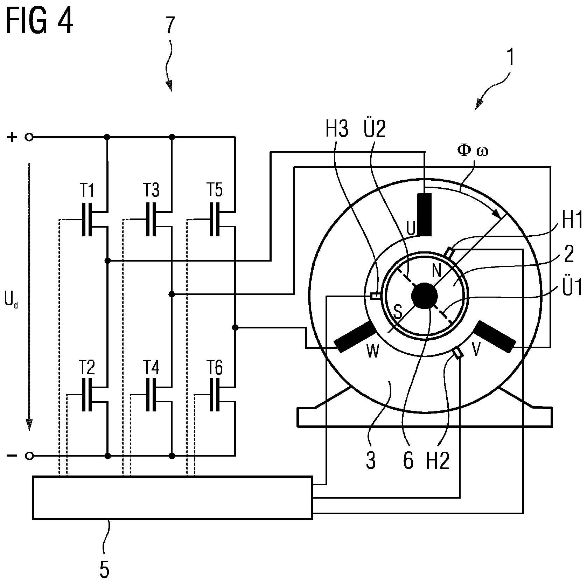

FIG 4 zeigt eine bürstenlose Gleichstrommaschine 1 mit einer Stromrichtereinrichtung 7, die im Unterschied zu FIG 1 nicht als Blockkommutator 4 mit den Schalttransistoren V1 bis V6 ausgeführt ist, sondern als an sich bekannte Stromrichtereinrichtung 7, bei der die Transistoren T1 bis T6 derart durch die Steuerung 5 mit Signalen, insbesondere pulsförmigen Signalen, deren Pulsweiten sinusförmig moduliert sind, angesteuert werden, dass mittels der Erregerwicklungen U, V und W ein gleichmäßig rotierendes Drehfeld erzeugt wird - im Unterschied zu dem sprunghaft sich ändernden Drehfeld bei der Ausführungsform gem. FIG 1. Gegebenenfalls sind für die in FIG 4 gezeigte Kommutierungsart noch zu den Transistoren T1 bis T6 parallel geschaltete Dioden erforderlich, die in FIG 4 nicht dargestellt sind.

Damit eine derartige, an die jeweilige Winkellage des Rotors 2 angepasste Steuerung des Erregerstromes in den Wicklungen U, V und W gelingen kann, ist eine genauere Bestimmung der Winkellage des Rotors 2 erforderlich, als dies bei bisherigen bürstenlosen Gleichstrommaschinen unter Verwendung von Hall-Sensoren H1, H2 und H3 der Fall war. Die Bestimmung der Winkellage φ des Rotors 2 erfolgt daher bei dem bürstenlosen Gleichstrommotor 1 gem. FIG 4 in der oben sowie nachfolgend beschriebenen, erfindungsgemäßen Art und Weise.

Im Unterschied zu der Aufführungsform gem. FIG 1 erzeugt ein bürstenloser Gleichstrommotor 1 mit einer derartigen Ansteuerung der Erregerwicklungen U, V und W ein wesentlich gleichmäßigeres Drehmoment und damit einen besseren Motorrundlauf.

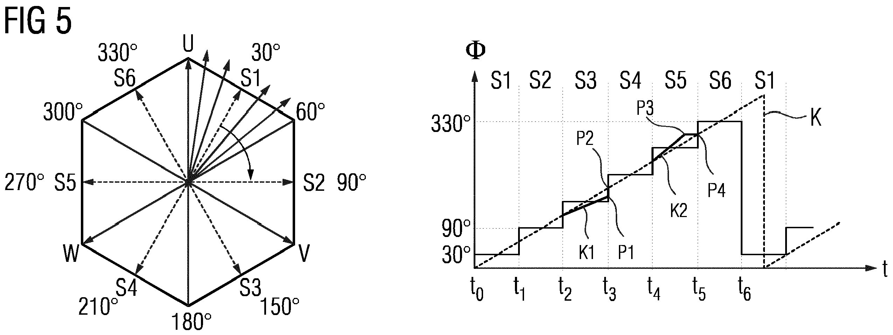

FIG 5 veranschaulicht die oben beschriebene Vorgehensweise grafisch. Im Unterschied zu FIG 3 sind nun in der linken Hälfte von FIG 5 für den ersten Sektor S1 exemplarisch einige weitere Winkellagen eingezeichnet, die nun ebenfalls von der Sensoreinrichtung erfasst und als Ausgangssignal ausgegeben werden können. Die Anzahl der zwischen den Sektorgrenzen erzeugbaren Zwischenwinkel ist nahezu beliebig, so dass ein annähernd kontinuierlicher Verlauf der Winkellage ausgebbar ist. Dies ist in der rechten Hälfte von FIG 5 dargestellt, die den kontinuierlichen Verlauf der Winkellage in Form der strichlierten Linie K zeigt.

Weiterhin angedeutet sind in FIG 5, rechte Seite, das Verhalten der Sensoreinrichtung bei einer zu kleinen oder bei einer zu großen Winkelkorrektur. Ist die Winkelkorrektur korrekt, so stimmen der durch Korrektur (Interpolation bzw. Extrapolation) ermittelte Winkel mit dem exakten Winkel an der jeweiligen Segmentgrenze überein.

Im Sektor S3 ist der Fall einer zu kleinen Winkelkorrektur veranschaulicht. An dem Sektor-Übergang zwischen S3 und S4 ergibt sich durch die Winkelkorrektur die Kennlinien K1 (durchgezogene Linie) und der ersichtliche Wert P1, der unterhalb der Kennlinie K liegt. An dem Sektor-Übergang liegt jedoch die Winkellage exakt vor, so dass der Wert P1 für die nachfolgenden Berechnungen korrigiert wird auf den tatsächlichen Wert P2.

Im Sektor S5 ist der Fall einer zu großen Winkelkorrektur veranschaulicht. Der mögliche Winkelbereich für den Sektor S5 reicht von 240° bis 300°. Wie anhand der Kennlinie K2 (durchgezogene Linie) ersichtlich ist, stellt sich der Wert von 300° bereits im Punkt P3 und damit vor Erreichen der Sektor-grenze ein. Dieser Wert (300°) wird dann bis zum Erreichen des Sektor-Übergangs zwischen S5 und S6 im Punkt P4 beibehalten.

Die Fälle einer zu geringen oder zu großen Winkelkorrektur können insbesondere dadurch verkleinert werden, dass bei der Winkelkorrektur nicht nur die Winkelgeschwindigkeit (erste Ableitung der Winkellage nach der Zeit) sondern auch wenigstens eine höhere Ableitung (Beschleunigung, Ruck, etc.) berücksichtigt wird.

Die höhere Genauigkeit bei der Bestimmung der Winkellage des Rotors 2 kann vorteilhaft bei der Regelung der Stromrichtereinrichtung 7 verwendet werden. Insbesondere ist es dadurch möglich, das von den Erregerwicklungen U, V, W erzeugte Drehfeld besser an die jeweilige Anwendung des Motors 1 anzupassen. Insbesondere ist damit eine für viele Motor-Anwendungen erforderliche feldorientierte Regelung (FOC) des Motorstromes möglich, bei der insbesondere eine sinusförmig modulierte pulsförmige Ansteuerung der Transistoren der Stromrichtereinrichtung erfolgt.

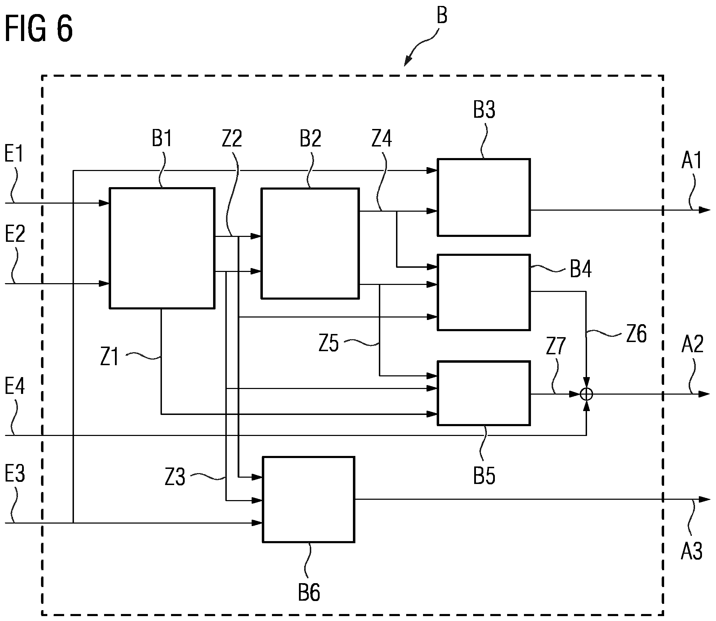

Die Erfindung wird nachfolgend anhand eines aus FIG 6 ersichtlichen Blockschaltbildes weiter erläutert. Im Unterschied zu den vorherigen Ausführungsbeispielen sind davon nun auch bürstenlose Gleichstrommaschinen mit einer Polpaarzahl > 1 umfasst.

Der Berechnungseinheit B werden als Eingangssignale E1 die drei Ausgangssignale der Hall-Sensoren (Hall-Signale) zugeführt. Ferner geht als weiteres Eingangssignal die Hall-Signal-Codierung, die die Zuordnung der Hall-Signale zu den Sektoren widerspiegelt, in die Berechnungseinheit B als Eingangssignal E2 ein. Weiterhin ist der Berechnungseinheit B als Eingangssignal E3 die Polpaarzahl der Gleichstrommaschine zugeführt.

In einem Block B1 erfolgt die Bestimmung des jeweils "aktiven" Sektors, d.h. des Sektors, in dem die aktuelle Winkellage des Rotors liegt. In diesem Block B1 wird anhand der Hall-Signale E1 und der Codierung E2 der gerade aktive Sektor aus den möglichen Sektoren (S1 bis S6) ermittelt.

Durch die Codierung kann der Hauptwinkel des betreffenden Sektors ermittelt und als Ausgangssignal Z1 ausgegeben werden.

B1 bestimmt und übergibt zusätzlich die Information, ob sich der aktive Sektor gegenüber dem letzten Regelungszyklus geändert hat, als Ausgangssignal Z2 aus.

Weiterhin werden in dem Block B1 Sektor-Übergänge erkannt, im Ausführungsbeispiel dadurch, dass eines der Ausgangssignale der Hall-Sensoren H1 bis H3 kippt. Mittels des Überganges von z.B. S1 zu S2 wird eine positive Drehrichtung (im Uhrzeigersinn), von S2 zu S1 eine negative Drehrichtung erkannt. Bei einem Überlauf von S6 zu S1 wird entsprechend auch eine positive Drehrichtung erkannt. Z3 zeigt als Ausgangssignal die Drehrichtung an.

Zusätzlich kann in diesem Block B1 geprüft werden, ob eine oder mehrere Sektoren "übersprungen" wurde bzw. wurden - was technisch nicht möglich ist - und eine entsprechende Fehlermeldung abgesetzt werden.

Die Ausgangssignale Z2 und Z3 des Blocks B1 sind einem Block B2 zugeführt, in dem aus der zeitlichen Änderung der Hall-Signale - wie bei einem Inkremental-Geber - die Winkelgeschwindigkeit des Rotors berechnet wird. Des Weiteren wird erkannt, ob sich der Motor im Stillstand befindet. Dies ist der Fall, wenn über einen langen Zeitraum keine Sektor-Änderung detektiert wir. Eventuell ist hier auch eine (untere) Drehzahlschwelle erforderlich, welche beispielsweise experimentell ermittelt wird.

Bei dem Ausgangssignal Z4 handelt es sich um die sog. "elektrische" Winkelgeschwindigkeit $\omega_{el}$, die ggf. bei einem Motor mit einer Polpaarzahl p > 1 noch durch die Polpaarzahl dividiert werden muss, um die "mechanische" Winkelgeschwindigkeit $\omega_{mech}$ des Rotors zu erhalten. Es gilt demnach der Zusammenhang:

$$\omega_{mech} \; = \; \omega_{el} \; / \; p$$

Entsprechend gilt über den Zusammenhang

$$\omega \; = \; 2\pi n$$

für die Drehzahl n:

$$n_{mech} \; = \; n_{el} \; / \; p$$

An seinem Ausgang liefert der Block B2 somit die Ausgangssignale Z4 (elektrische Winkelgeschwindigkeit bzw. "elektrische Drehzahl") und die "Stillstandsinformation" Z5. Letztere gibt Auskunft darüber, ob sich der Rotor überhaupt dreht.

In einem Block B3, dem als Eingangssignale die Größen Z4 und Z5 sowie die Polpaarzahl (Eingangssignal E3) des Motors zugeführt sind, wird mittels eines Mittelwert-/ PT1-Filters die elektrische Winkelgeschwindigkeit bzw. der elektrische Drehzahlwert Z4 geglättet und durch die Polpaarzahl dividiert, bevor sie als geglättete mechanische Winkelgeschwindigkeit bzw. geglättete mechanische Drehzahl als Ausgangssignal A1 der Berechnungseinheit B ausgegeben wird.

Im Block B5 ermittelt der "elektrische Winkelgeber" anhand der Signale Z1, Z3 und Z5 den "elektrischen" Winkel. Wird der Zustand "Stillstand" von der Geschwindigkeitsberechnung gesetzt, wird der eingangs im Block B1 ermittelte Hauptwinkel auf den Ausgang Z7 gesetzt, also der mittlere Winkel des jeweiligen Sektors.

Im Block B4 bestimmt der Winkelinterpolator in Abhängigkeit der (elektrischen) Winkelgeschwindigkeit Z4 den (elektrischen) "Offset Winkel". Bei Änderung des Signals Z2 wird der Interpolator resettet und bei zu geringen Geschwindigkeiten (Z5 = 0) abgeschaltet bzw. der Ausgabewert auf 0 gesetzt. Das Ausgangssignal Z6 des Winkelinterpolators wird auf $\mp \pi/3$ (60°) begrenz, damit nur innerhalb der Sektorgrenzen und nicht über einen Sektor hinaus interpoliert wird.

Die korrigierte (elektrische) Winkellage am Ausgang A2, die insbesondere für die feldorientierte Regelung (FOC) verwendet wird, setzt sich dann im Ausführungsbeispiel aus den Ausgangssignalen Z6 und Z7 und damit aus folgenden Anteilen zusammen:

$$\varphi_{el} \; = \; \varphi_{main} \; \mp \pi/6 \; + \; \varphi_{int}$$

wobei

    $\varphi_{el}$ der elektrische Winkel,
    $\varphi_{main}$ der Hauptwinkel
    $\varphi_{int}$ der interpolierte Offset-Winkel
    ist.

Weiterhin sind der Zusatzwinkel $\pi/6$ und der interpolierte Winkel $\varphi_{int}$ nur bei drehendem Motor aktiv (n > "Stillstandsdrehzahl" (max. Drehzahl, die noch als Stillstand gewertet wird)).

Im Block B6 erfolgt die Positionsbestimmung in Abhängigkeit der Sektor-Änderung (Z2), der Drehrichtung (Z3) und der Polpaarzahl (E3). Dabei wird die Position inkrementiert bzw. dekrementiert. Nach einem Überlauf der maximalen Schritte fängt der Singleturnzähler erneut von 0 an.

Ist die Drehrichtung positiv und der Motor ist nicht im Stillstand, wird vom Hauptwinkel $\pi/6$ abgezogen.

$$\varphi \; = \; \varphi_{main} \; - \; \pi/6$$

Ist die Drehrichtung negativ und der Motor ist nicht im Stillstand, wir zum Hauptwinkel $\pi/6$ addiert.

$$\varphi \; = \; \varphi_{main} \; + \; \pi/6$$

Am Ausgang des Blocks B6 werden die ermittelten Singleturn- und die berechneten Multiturnwerte als Ausgangssignal A3 abgeben.

Die Winkellagen bei Stillstand oder sehr "langsamen" Motorlauf sind in FIG 3 aufgezeigt. Es werden jeweils die Hauptwinkel in der Mitte der Sektoren ausgegeben.

Die Winkellagen bei normalen (schnellen) Motorlauf sind in FIG 5 veranschaulicht. Die Winkellagen werden nach dem Stillstand entsprechend den Sektor-Übergängen gesetzt und zwischen den Zuständen mittels der Winkelgeschwindigkeitsinformation interpoliert.

Bei einer Polpaarzahl > 1 sind die Werte entsprechend anzupassen. Insbesondere ist die elektrische Winkel-Änderung durch die Polpaarzahl zu dividieren, um die entsprechende mechanische Winkel-Änderung des Rotors zu erhalten.

Bei einem Motor mit Hall-Sensoren kann durch die (exakte) Winkeldetektion bei den Sektor-Übergängen in Kombination mit der Winkelinterpolation aus der berechneten Winkelgeschwindigkeit die jeweilige Winkellage des Rotors deutlich exakter bestimmt werden als bei der bisherigen Vorgehensweise. Der Rotorwinkel (die Winkellage) kann somit bei jedem Regelungstakt erfindungsgemäß bestimmt werden und es wird nicht wie bei zuvor bekannten Verfahren "hart" zwischen den Hauptwinkeln umgeschaltet. Dadurch ist eine effektive Regelung der Motorströme, insbesondere in einer FOC, möglich.

Insgesamt zeigt sich durch diese Methode ein deutlich besserer Motorrundlauf mit einer gleichmäßigen Drehmomentabgabe. Zusätzlich verringern sich die Verluste im Umrichter und im Motor bei gleichem Drehmoment um theoretisch bis zu 4,7 %.

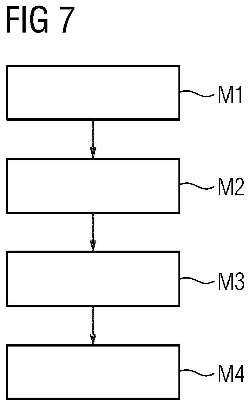

Die Erfindung zeichnet sich insbesondere durch folgende Verfahrensschritte aus, die in FIG 7 nochmals veranschaulicht sind:

In einem ersten Verfahrensschritt M1 wird geprüft, ob sich wenigstens ein Hall-Sensor-Ausgangssignal innerhalb eines bestimmten Zeitraums ändert. Ist dies nicht der Fall, wird als Ausgangssignal eine "Stillstandsinformation" sowie der aus den Hall-Sensor-Ausgangssignalen ermittelte Hauptwinkel ausgegeben. Dieser Zustand wird so lange beibehalten, bis eine vorgegebene oder vorgebbare Mindest-Rotationsgeschwindigkeit erkannt wird.

Wird die Mindest-Rotationsgeschwindigkeit überschritten, wird in einem zweiten Verfahrensschritt M2 wird als "Stillstandsinformation" die Information "Rotor dreht sich" ausgegeben und anhand einer Abfolge an Hall-Sensor-Ausgangssignalen, die jeweils an den Übergängen benachbarter Sektoren betrachtet werden, eine Winkelgeschwindigkeit bestimmt, mit der der Rotor rotiert.

In einem dritten Verfahrensschritt M3 wird aus den Ausgangssignalen der Hall-Sensoren zu einem ersten Zeitpunkt, in dem eines der Ausgangssignale seinen Zustand ändert, die Winkellage des Rotors - im Rahmen der Messgenauigkeit des betreffenden Hall-Sensors - "exakt" bestimmt und als Winkellage für diesen ersten Zeitpunkt ausgegeben.

In einem vierten Verfahrensschritt M4 wird anhand der "exakten" Winkellage (Schritt M3) in Verbindung mit der in Schritt M2 ermittelten Winkelgeschwindigkeit für den ersten Zeitpunkt nachfolgende Zeitpunkte jeweils die Winkellage extrapoliert und als Winkellage ausgegeben, solange, bis entweder erneut eines der Ausgangssignale seinen Zustand ändert und der Prozess bei Schritt M2 von vorn beginnt, oder, wenn innerhalb eines vorgegebenen oder vorgebbaren Zeitraumes kein weiteres Ausgangssignal seinen Zustand ändert, der Prozess bei Verfahrensschritt M1 von vorn beginnt.

**Patentansprüche**

1. Bürstenlose Gleichstrommaschine (1), umfassend:

    - einen Stator (3) mit wenigstens einer Erregerwicklung (U, V, W),

    - einem Rotor (2) mit wenigstens einem Permanentmagnet (N, S),
    - eine Sensoreinrichtung mit wenigstens einem Hall-Sensor (H1, H2, H3) zum Detektieren einer Winkellage ($\phi$) des Rotors (2) relativ zu dem Stator (3),
    - wobei die Erregerwicklung (U, V, W) mittels einer Stromrichtereinrichtung (7) angesteuert wird, die einen Stromfluss durch die Erregerwicklung (U, V, W) in Abhängigkeit der von der Sensoreinrichtung detektierten Winkellage ($\phi$) bestimmt,
    - wobei mittels der Sensoreinrichtung eine Winkelgeschwindigkeit ($\omega$) ermittelbar ist, mit der der Rotor (2) relativ zu dem Stator (3) rotiert,

    **dadurch gekennzeichnet, dass**
    anhand der detektierten Winkellage ($\phi$) und der ermittelten Winkelgeschwindigkeit ($\omega$) eine korrigierte Winkellage ($\phi$) bestimmbar ist und der Stromfluss durch die Erregerwicklung (U, V, W) in Abhängigkeit der korrigierten Winkellage ($\phi$) bestimmbar ist.

2. Bürstenlose Gleichstrommaschine (1) nach Anspruch 1, umfassend wenigstens drei, insbesondere genau drei, Erregerwicklungen (U, V, W), die insbesondere gleichmäßig um eine Rotationsachse (6) der Gleichstrommaschine (1) verteilt am Stator (3) angeordnet sind.

3. Bürstenlose Gleichstrommaschine (1) nach Anspruch 1 oder 2, umfassend eine Vielzahl an Permanentmagneten und damit einhergehend eine Vielzahl an Polpaaren, die, insbesondere gleichmäßig, um eine bzw. die Rotationsachse (6) der Gleichstrommaschine (1) verteilt am Rotor (2) angeordnet sind.

4. Bürstenlose Gleichstrommaschine (1) nach einem der Ansprüche 1 bis 3, wobei die Sensoreinrichtung mehrere, insbesondere genau drei Hall-Sensoren (H1, H2, H3) umfasst, die, insbesondere gleichmäßig, um eine bzw. die Rotationsachse (6) der Gleichstrommaschine (1) verteilt am Stator (3) angeordnet sind.

5. Bürstenlose Gleichstrommaschine (1) nach einem der Ansprüche 1 bis 4, wobei die Hall-Sensoren (H1, H2, H3) jeweils ein binäres Ausgangssignal erzeugen.

6. Bürstenlose Gleichstrommaschine (1) nach Anspruch 5, wobei mittels der zeitlichen Abfolge der von den Hall-Sensoren erzeugten binären Ausgangssignale die Winkelgeschwindigkeit ($\omega$) des Rotors (2) bestimmbar ist.

7. Bürstenlose Gleichstrommaschine (1) nach Anspruch 5 oder 6, wobei die Winkellage des Rotors (2) in Sektoren (S1 bis S6) einteilbar ist, derart, dass unterschiedlichen von den Hall-Sensoren (H1, H2, H3) erzeugten Ausganssignalen jeweils ein bestimmter Sektor (S1 bis S6) zuordenbar ist.

8. Bürstenlose Gleichstrommaschine (1) nach Anspruch 7, wobei zum Zeitpunkt der Änderung genau eines der von den Hall-Sensoren (H1, H2, H3) erzeugten Ausganssignale die Winkellage (φ) des Rotors (2), insbesondere als Grenzwinkel zwischen zwei benachbarten Sektoren (S1 bis S6), exakt bestimmbar ist.

9. Bürstenlose Gleichstrommaschine (1) nach einem der Ansprüche 6 bis 8, wobei anhand der detektierten Winkellage (φ) und der detektierten Winkelgeschwindigkeit (ω) des Rotors (2), insbesondere durch Interpolation oder Extrapolation, eine korrigierte Winkellage (φ) für Winkel innerhalb eines Segments (S1 bis S6) bestimmbar ist.

10. Bürstenlose Gleichstrommaschine (1) nach einem der vorherigen Ansprüche, ausgebildet als bürstenloser Gleichstrommotor (1).

11. Verfahren zum Ansteuern einer Erregerwicklung (U, V, W) einer bürstenlosen Gleichstrommaschine (1) mittels einer Stromrichtereinrichtung,

    wobei die bürstenlose Gleichstrommaschine (1) einen Stator (3) mit wenigstens einer Erregerwicklung (U, V, W), einen Rotor (2) mit wenigstens einem Permanentmagnet (N, S) sowie eine Sensoreinrichtung mit wenigstens einem Hall-Sensor (H1, H2, H3) umfasst,
    wobei die Stromrichtereinrichtung (7) einen Stromfluss durch die Erregerwicklung (U, V, W) in Abhängigkeit einer von der Sensoreinrichtung detektierten Winkellage (φ) des Rotors (2) bestimmt,
    wobei die Sensoreinrichtung eine Winkelgeschwindigkeit (ω) detektiert, mit der der Rotor (2) relativ zu dem Stator (3) rotiert,
    **dadurch gekennzeichnet, dass**
    anhand der detektierten Winkellage (φ) und der detektierten Winkelgeschwindigkeit (ω) eine korrigierte Winkellage (φ) bestimmt wird und der Stromfluss durch die Erregerwicklung (U, V, W) in Abhängigkeit der korrigierten Winkellage (φ) bestimmt wird.

12. Verfahren nach Anspruch 11, wobei der Stator (3) wenigstens drei, insbesondere genau drei oder Vielfache von drei, Erregerwicklungen (U, V, W), die insbesondere gleichmäßig um eine Rotationsachse (6) der Gleichstrommaschine (1) verteilt am Stator (3) angeordnet sind, aufweist.

13. Verfahren nach Anspruch 11 oder 12, wobei der Rotor (2) eine Vielzahl an Permanentmagneten und damit einhergehend eine Vielzahl an Polpaaren, die, insbesondere gleichmäßig, um eine bzw. die Rotationsachse (6) der Gleichstrommaschine (1) verteilt am Rotor (2) angeordnet sind, aufweist.

14. Verfahren nach einem der Ansprüche 11 bis 13, wobei die Sensoreinrichtung mehrere, insbesondere genau drei, Hall-Sensoren (H1, H2, H3) aufweist, die, insbesondere gleichmäßig, um eine bzw. die Rotationsachse (6) der Gleichstrommaschine (1) verteilt am Stator (3) angeordnet sind, wobei die Hallsensoren (H1, H2, H3) insbesondere jeweils ein binäres Ausgangssignal erzeugen.

15. Verfahren nach einem der Ansprüche 11 bis 14, wobei zu einem bestimmten Zeitpunkt, zu dem sich das von dem Hall-Sensor bzw. von einem der Hall-Sensoren (H1, H2, H3) erzeugte Ausgangssignal sich ändert, die Winkellage (φ) des Rotors (2) bestimmt wird.

16. Verfahren nach einem der Ansprüche 11 bis 15, wobei mittels der zeitlichen Abfolge der von dem Hall-Sensor bzw. den Hall-Sensoren (H1, H2, H3) erzeugten binären Ausgangssignale die Winkelgeschwindigkeit (ω) des Rotors (2) bestimmt wird.

17. Verfahren nach Anspruch 15 und 16, wobei für wenigstens einen dem bestimmten Zeitpunkt folgenden Zeitpunkt die Winkellage (φ) des Rotors (2) anhand der zu dem bestimmten Zeitpunkt bestimmten Winkellage (φ) und der Winkelgeschwindigkeit (ω) des Rotors (2) bestimmt wird.

18. Verfahren nach einem der vorherigen Ansprüche, wobei die Winkellage (φ) des Rotors (2) in Sektoren (S1 bis S6) eingeteilt wird, derart, dass unterschiedlichen von den Hall-Sensoren (H1, H2, H3) erzeugten Ausganssignalen jeweils ein bestimmter Sektor (S1 bis S6) zugeordnet wird.

19. Verfahren nach Anspruch 18, wobei zum Zeitpunkt der Änderung genau eines der von den Hall-Sensoren (H1, H2, H3) erzeugten Ausgangsignale die Winkellage (φ) des Rotors (2), insbesondere als Grenzwinkel zwischen zwei benachbarten Sektoren (S1 bis S6), exakt bestimmt wird.

20. Verfahren nach einem der vorherigen Ansprüche zur feldorientierten Regelung des Stromflusses in den Erregerwicklungen (U, V, W).

FIG 1

# FIG 2

| | H1 | H2 | H3 | U (V1 / V2) | V (V3 / V4) | W (V5 / V6) | Segment | Angle |
|---|---|---|---|---|---|---|---|---|
| | 1 | 0 | 0 | z | 0 | 1 | S1 | 0° |
| | 1 | 1 | 0 | 1 | 0 | z | S2 | 60° |
| | 0 | 1 | 0 | 1 | z | 0 | S3 | 120° |
| | 0 | 1 | 1 | z | 1 | 0 | S4 | 180° |
| | 0 | 0 | 1 | 0 | 1 | z | S5 | 240° |
| | 1 | 0 | 1 | 0 | z | 1 | S6 | 300° |
| | 1 | 0 | 0 | z | 0 | 1 | S1 | 360° |
| | 1 | 1 | 0 | 1 | 0 | z | S2 | |
| | 0 | 1 | 0 | 1 | z | 0 | S3 | |
| | 0 | 1 | 1 | z | 1 | 0 | S4 | |
| | 0 | 0 | 1 | 0 | 1 | z | S5 | |
| | 1 | 0 | 1 | 0 | z | 1 | S6 | 720° |

EP 4 287 494 A1

# FIG 3

EP 4 287 494 A1

FIG 4

EP 4 287 494 A1

# FIG 5

EP 4 287 494 A1

FIG 6

EP 4 287 494 A1

FIG 7

Europäisches
Patentamt

European
Patent Office

Office européen
des brevets

**EUROPÄISCHER RECHERCHENBERICHT**

Nummer der Anmeldung

**EP 22 17 7029**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 320 187 A2 (DELPHI TECH INC [US]) 18. Juni 2003 (2003-06-18) * Absätze [0002], [0006]; Ansprüche 3,13; Abbildungen 1,4 * ----- | 1-20 | INV. H02P6/17 H02P21/00 |
| X | Microsemi ET AL: "Field Oriented Control of Permanent Magnet Synchronous Motors User's Guide Field Oriented Control of Permanent Magnet Synchronous Motors User's Guide Table of Contents", , 30. Juni 2012 (2012-06-30), XP055204517, Gefunden im Internet: URL:http://www.microsemi.com/document-port al/doc_view/130909-sf-foc-pmsm-hall-ug [gefunden am 2015-07-24] * Seiten 7,16,17; Abbildungen 1-13 * ----- | 11 | |

RECHERCHIERTE SACHGEBIETE (IPC)

H02P

Der vorliegende Recherchenbericht wurde für alle Patentansprüche erstellt

| Recherchenort | Abschlußdatum der Recherche | Prüfer |
|---|---|---|
| **München** | **8. November 2022** | **Schneider, Gernot** |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
......................................................
& : Mitglied der gleichen Patentfamilie, übereinstimmendes Dokument

EPO FORM 1503 03.82 (P04C03)

**EP 4 287 494 A1**

## ANHANG ZUM EUROPÄISCHEN RECHERCHENBERICHT
## ÜBER DIE EUROPÄISCHE PATENTANMELDUNG NR.

EP 22 17 7029

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08−11−2022

| Im Recherchenbericht angeführtes Patentdokument | Datum der Veröffentlichung | Mitglied(er) der Patentfamilie | Datum der Veröffentlichung |
|---|---|---|---|
| EP 1320187 A2 | 18−06−2003 | EP 1320187 A2 | 18−06−2003 |
| | | US 2003102829 A1 | 05−06−2003 |

EPO FORM P0461

Für nähere Einzelheiten zu diesem Anhang : siehe Amtsblatt des Europäischen Patentamts, Nr.12/82

19